# EUROPEAN PATENT SPECIFICATION

(11) **EP 1 040 115 B1**
(45) Date of publication and mention of the grant of the patent: **30.06.2004**
(21) Application number: 98965819.0
(22) Date of filing: 08.12.1998
(51) Int. Cl.: C07F 11/00, C10M 159/18

(54) **METHOD FOR THE PREPARATION OF TRI-NUCLEAR MOLYBDENUM-SULFUR COMPOUNDS AND THEIR USE AS LUBRICANT ADDITIVES**
VERFAHREN ZUR HERSTELLUNG VON DREIKERNIGEN MOLYBDENUM-SCHWEFEL VERBINDUNGEN UND IHRE VERWENDUNG ALS SCHMIERMITTELZUSÄTZE
PROCEDE DE PREPARATION DE COMPOSES TRINUCLEAIRES DE MOLYBDENE-SOUFRE ET LEUR UTILISATION EN TANT QU'ADDITIFS POUR LUBRIFIANT

(30) Priority: 12.12.1997 US 990053; 10.07.1998 GB 9814967
(43) Date of publication of application: 04.10.2000
(73) Proprietor: Infineum USA L.P., Linden, New Jersey 07036 (US)
(72) Inventor: MCCONNACHIE, Jonathan, Martin, Flemington, NJ 08822 (US); STIEFEL, Edward, Ira, Bridgewater, NJ 08807 (US); ARUNASALAM, Velautha, Cumaran, Thatcham, Berkshire RG19 4QL (GB); BELL, Ian, Alexander, Weston, Southmoor, Oxon OX13 5NQ (GB)
(74) Representative: Mansell, Keith Rodney
(86) International application number: PCT/EP1998/008124
(87) International publication number: WO 1999/031113

(56) References cited:
- WO-A-98/26030
- US-A- 4 178 258
- US-A- 4 978 464
- K.HEGETSCHWEILR E.O. : "Identification and characterization of trinuclear Molybdenum-Sulfur Clusters by fast Atom Bombardement (FAB) Mass Spectrometry" INORGANIC CHEMISTRY, vol. 30, no. 4, 20 February 1991, pages 873-876, XP002102746
- MITCHELL P C H: "OIL-SOLUBLE MO-S COMPOUNDS AS LUBRICANT ADDITIVES" WEAR, vol. 100, 1984, pages 281-300, XP002062228
- ZIMMERMANN H.: 'Preparation of complexes' INORGANIC CHEMISTRY vol. 30, no. 22, 1991, pages 4336 - 4341

## Description

The invention relates to a method of making trinuclear molybdenum-sulfur compounds.

Wear, vol 100 (1984), pages 281-300 describes the use of molybdenum compounds as lubricant additives for reducing wear, friction and oxidation.

New lubricant additives that possess antifriction, antiwear and antioxidant properties are continually needed. Some molybdenum compounds possess one or more of these properties; International Patent Application WO 98/26030 describes trinuclear molybdenum-sulfur compounds as lubricant additives.

The above-mentioned International Patent Application describes making trinuclear molybdenum - sulfur compounds of the formula Mo₃SₓL_{y}, wherein L is dihydrocarbyldithiocarbamate, x is 4 to 10 and y is 4, using three molar equivalents of thiuram disulfide to one molar equivalent of (NH₄)₂Mo₃S₁₃.2H₂O. This reaction undesirably results in the formation of two molar equivalents of a by-product of the formula NH₄L_{y} that must be removed or further treated in order to reduce the incompatibility of the product with seals and corrosivity to copper.

Inorganic Chemistry, vol 30, 1991, pages 873-6 discloses the preparation and characterisation of trinuclear molybdenum compounds

Inorganic Chemistry, vol 30, 1991, pages 4336-4341 discloses the preparation and structural details of trinuclear molybdenum compounds and teaches in particular the reactivity of the [Mo₃S(S₂)₆] anionic core.

Beneficially, the present invention, by decreasing the amount of ligand source that is required as a starting material, produces an absence or an essential absence of such undesired by-product in the product, and solves the above problem.

In a first aspect, the invention is a method of making an oil-soluble or oil-dispersible trinuclear molybdenum-sulfur compound comprising a trinuclear molybdenum core bonded to ligands capable of rendering the compound oil-soluble or oil-dispersible, one or more of the ligands, preferably each ligand, containing a S atom via which it is bonded to the core, which method comprises reacting
(A) one molar equivalent of a reactant compound containing an anion that contains a trinuclear molybdenum core, such as a thio- or polythio-trinuclear molybdenum core, for example the [Mo₃S₁₃]²⁻ ion, and
(B) less than 3, such as 1.5 to 2.5, preferably 2 to 2.1, molar equivalents of an organic disulfide, from which said one or more ligands is or are derived, to produce said trinuclear compound.

Without wishing to be bound by any theory, it is believed that, in the reaction, the S-S bond of the disulfide cleaves so that each S atom and its attendant residue of atoms bonded thereto forms said one or more ligands. Preferably, the disulfide is a bis(disulfide).

Preferably, two molar equivalents of the disulfide are used in the method of invention.

The features of the invention will now be discussed in more detail.

The compounds made by the present invention have, as stated above, a trinuclear molybdenum-sulfur core to which the ligands are bonded. They may, for example, have the formula Mo₃SₓL_{y}
wherein
x is from 4 to 10, such as 4 to 7, preferably 4 or 7;
L represents the ligands; and
y is a number to neutralise the charge on the Mo₃Sₓ core, such as 4 when L is monovalent.

By "bonded" in this specification is meant to include covalent bonding, bonding by electrostatic interaction as in the case of a counter-ion, and forms of bonding intermediate between covalent and electrostatic bonding. Ligands within the same compound may be differently bonded. For example, when y is 4, three of L may be covalently bonded and the fourth of L electrostatically bonded.

The disulfide may be represented by the formula Res¹-S-S-Res² wherein Res¹ and Res² represent residues of the disulfide molecule which may be the same or different, preferably the same. Thus, the ligands in the compounds made by the method of the invention may be represented by the formulae Res¹-S- and Res²-S-.

Preferably, each of Res¹ and Res² may be represented by a formula selected from the formulae I to III depicted below: 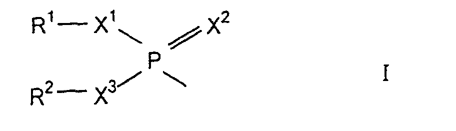 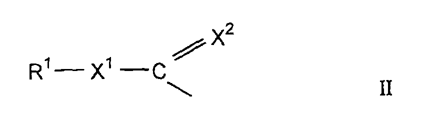 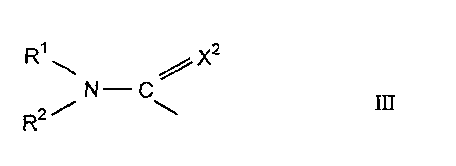 in which formulae, each of R¹ and R² independently represents a hydrocarbyl group or a hydrogen atom, provided that at least one hydrocarbyl group is present in the disulfide to confer oil-solubility or oil-dispersability on the trinuclear molybdenum compound; and each of X¹, X² and X³ independently represents an oxygen atom or a sulfur atom.

Examples of disulfides for use in the present invention are hydrocarbyl substituted thiuram disulfides such as a di- or tetrahydrocarbyl thiuram disulfide; bis (dihydrocarbyl dithio-phosphonate) disulfides; bis (dithiohydrocarbyl dithio-phosphonate) disulfides; hydrocarbyl-substituted xanthogens; or hydrocarbyl-substituted thioxanthogens, of which tetrahydrocarbyl thiuram disulfides are preferred. When the latter are used, the ligands will be dithiocarbamate ("dtc") ligands.

The term "hydrocarbyl" denotes a substituent having a carbon atom directly attached to the remainder of the residue and hence to a ligand in the product and is predominantly hydrocarbyl in character within the context of this invention. Such substituents include the following: (1) hydrocarbon substituents, that is aliphatic (for example alkyl or alkenyl), alicyclic (for example cycloalkyl or cycloalkenyl) substituents, aromatic-, aliphatic- and alicyclic-substituted aromatic nuclei, as well as cyclic substituents wherein the ring is completed through another portion or the residue (that is any two indicated substituents may together form an alicyclic group); (2) substituted hydrocarbon substituents, that is those containing non-hydrocarbon groups which, in the context of this invention, do not alter the predominantly hydrocarbyl character of the substituent. Those skilled in the art will be aware of suitable groups (e.g., halo, (especially chloro and fluoro), amino, alkoxyl, mercapto, alkylmercapto, nitro, nitroso and sulfoxy); (3) hetero substituents, that is substituents which, while predominantly hydrocarbon in character within the context of this invention, contain atoms other than carbon present in a chain or ring otherwise composed of carbon atoms.

The hydrocarbyl groups are preferably alkyl (e.g, in which the carbon atom attached to the remainder of the ligand is primary, secondary or tertiary), aryl, substituted aryl and ether groups.

Importantly, the hydrocarbyl groups have a sufficient number of carbon atoms to render the compounds soluble or dispersible in oil. The compounds' oil solubility or dispersibility may be influenced by the number of carbon atoms in the ligands. Preferably the ligands have a sufficient number of carbon atoms to render the compound soluble or dispersible in oil. The total number of carbon atoms present among all of the hydrocarbyl groups of the compounds' ligands typically will be at least 21, e.g., 21 to 800, such as at least 25, at least 30 or at least 35. For example, the number of carbon atoms in each alkyl group will generally range between 1 to 100, preferably 1 to 40, and more preferably between 3 and 20.

An example of a reactant compound in the method of the invention is an ammonium salt of the anion such as (NH₄)₂Mo₃S₁₃.nH₂O wherein n is 0 to 2, including non-integer values. The reaction may be carried out at elevated temperature, typically 60°C to 150°C. The reaction may be carried out in an inert atmosphere such as of argon or nitrogen; it may also be carried out in the presence of an oxidizing source such as air, hydrogen peroxide or oxygen. The reaction may be carried out in the presence of a sulfur-abstracting agent such as triphenyl phosphine, a cyanide or a sulfite.

The resulting product, such as Mo₃SₓL_{y}, in the reaction mixture may be isolated. Any excess of the reactant compound containing the anion resulting from the method of the present invention may, if desired, be removed such as by filtration.

The reaction may be carried out in a suitable organic solvent which may be removed from the product such as by distillation after the reaction has taken place. To lessen the risk of thermally degrading the product during distillation, it may be appropriate to use, as solvent, a low boiling point organic liquid such as methanol which may be distilled at a lower temperature than solvents of higher boiling point.

The reaction product may be useful as a multifunctional lubricating oil additive having enhanced antifriction, antiwear and antioxidant properties and may be used to enhance antifriction, antiwear and antioxidancy properties of an oil of lubricating viscosity by adding the reaction product thereto to produce a lubricating oil composition.

Other additives such as known in the art may be incorporated, provided they are different from those of the invention. Examples are dispersants, detergents, rust inhibitors, anti-wear agents, anti-oxidants, corrosion inhibitors, friction modifiers, pour point depressants, anti-foaming agents, viscosity modifiers and surfactants.

In the preparation of lubricating oil compositions, it is common practice to introduce additive(s) therefor in the form of concentrates of the additive(s) in a suitable oleaginous, typically hydrocarbon, carrier fluid, e.g. mineral lubricating oil, or other suitable solvent. Oils of lubricating viscosity as well as aliphatic, naphthenic, and aromatic hydrocarbons are examples of suitable carrier fluids for concentrates.

Concentrates constitute a convenient means of handling additives before their use, as well as facilitating solution or dispersion of additive in lubricating oil compositions. When preparing a lubricating oil composition that contains more than one type of additive (sometimes referred to as "additive components"), each additive may be incorporated separately - each in the form of a concentrate. In many instances, however, it is convenient to provide a so-called additive "package" (also referred to as an "adpack") comprising two or more additives in a single concentrate.

A concentrate may contain 1 to 90, such as 10 to 80, preferably 20 to 80, more preferably 20 to 70, mass % active ingredient of the additive or additives.

Lubricating oil compositions may be prepared by adding to an oil of lubricating viscosity a mixture of an effective minor amount of at least one additive and, if necessary, one or more co-additives such as described herein. The preparation may be accomplished by adding the additive directly to the oil or by adding it in the form of a concentrate thereof to disperse or dissolve the additive. Additives may be added to the oil by any method known to those skilled in the art, either prior to, contemporaneously with, or subsequent to addition of other additives.

### EXAMPLES

The invention may be demonstrated with reference to the following examples.

As used herein "coco" is an alkyl chain or mixture of alkyl chains of varying even numbers of carbon atoms, typically from C₆ to C₁₈.

### EXAMPLE 1

Synthesis of Mo₃S₇(dtc)₄ from two molar equivalents of thiuram disulfide ("TDS") per molar equivalent of a trinuclear molybdenum compound under an inert atmosphere was carried out by placing (NH₄)₂Mo₃S₁₃.2H₂O (7.76 g, 10 mmol) and tetracocothiuram disulfide (19.5 g, 20 mmol) in a flask which was evacuated and filled three times with Ar. Oxygen-free toluene (50 mL) and methanol (50 mL) were added to the flask and the solvents were degassed. The solution was refluxed vigorously for eight hours. The solvents were then removed by distillation under reduced pressure. The product was dissolved in heptane and filtered. The heptane was then removed by distillation under reduced pressure to yield approximately 25 g of Mo₃S₇(dtc)₄.

### EXAMPLE 2

Synthesis of Mo₃S₇(dtc)₄ was carried out by the procedure of Example 1 but incorporating an air/O₂ purge. Thus, air was purged through the solution when it was refluxed vigorously for eight hours. The product was approximately 25 g of Mo₃S₇(dtc)₄.

### TESTS

Three molybdenum-containing oils were tested for friction retention properties by comparing the High Frequency Reciprocating Rig (HFRR) performance of the oils when fresh with that of the oils when aged. The oils were aged by treatment with 1% NO₂ in air at 60 ml/min at 150°C for 24 hours. The friction properties were then recorded at 140°C and compared with the results from the fresh oils. Three oils were compared by this method, each containing corresponding amounts (500 ppm) of molybdenum from three different molybdenum sources. The molybdenum components were MV822®, a commercial dinuciear component; Mo₃S₇dtc₄ made by using three molar equivalents of thiuram disulfide (TDS) as described in International Patent Application WO 98/26030 (METHOD A); and Mo₃S₇dtc₄ made by the method of the present invention using two molar equivalents of TDS (METHOD 1). The results of these tests are shown in Table 1 below. Both of the trinuclear molybdenum compound-containing oils showed better friction retention properties than the oil containing the dinuclear molybdenum compound: Also, oils containing trinuclear molybdenum compounds made by different methods give comparable performances in the tests.

**TABLE 1**

| | | METHOD A | METHOD 1 |
|---|---|---|---|
| Molybdenum compound (@ 500 ppm) | MV822® | Mo₃S₇dtc₄ | Mo₃S₇dtc₄ |
| coefficient of friction for fresh oil | 0.096 | 0.086 | 0.095 |
| coefficient of friction for used oil | 0.158 | 0.079 | 0.084 |

## Claims

1. A method of making an oil-soluble or oil-dispersible trinuclear molybdenum-sulfur compound comprising a trinuclear molybdenum core bonded to ligands capable of rendering the compound oil-soluble or oil-dispersible, one or more of the ligands containing a S atom, via which it is bonded to the core, which method comprises reacting
(A) one molar equivalent of a reactant compound containing an anion that contains a trinuclear molybdenum core, and
(B) less than 3 molar equivalents of a organic disulfide from which said one or more ligands is or are derived, to produce said trinuclear compound

2. The method as claimed in claim 1 wherein the reactant compound contains the [Mo₃S₁₃]²⁻ ion.

3. The method as claimed in claim 1 or claim 2 wherein two molar equivalents of the disulfide are reacted.

4. The method as claimed in any of the preceding claims wherein the trinuclear molybdenum compound has the formula Mo₃SₓL_{y}
wherein
x is from 4 to 10 such as 4 or 7,
L represents the ligands, and
y is a number to neutralise the charge on the Mo₃Sₓ core.

5. The method as claimed in any of the preceding claims wherein the disulfide is a tetrahydrocarbyl thiuram disulfide; a bis (dihydrocarbyl dithio-phosphonate) disulfide; a bis (dithiohydrocarbyl dithio-phosphonate) disulfide; a hydrocarbyl-substituted xanthogen; or a hydrocarbyl-substituted thioxanthogen.

6. The method as claimed in claim 5 wherein the hydrocarbyl groups are alkyl groups, having for example from 3 to 20 carbon atoms.

## Patentansprüche

1. Verfahren zur Herstellung einer öllöslichen oder öldispergierbaren, dreikernigen Molybdän-Schwefel-Verbindung, die einen dreikernigen Molybdänkern umfasst, der an Liganden, die in der Lage sind, die Verbindung öllöslich oder öldispergierbar zu machen, gebunden ist, wobei einer oder mehrere der Liganden ein S-Atom enthalten, über das er an den Kern gebunden ist, wobei das Verfahren die Umsetzung von
(A) einem molaren Äquivalent Reaktantverbindung, die ein einen dreikernigen Molybdänkern enthaltendes Anion enthält, und
(B) weniger als 3 molaren Äquivalenten organisches Disulfid umfasst, von dem der eine oder die mehreren Liganden abgeleitet ist oder sind, um die dreikernige Verbindung herzustellen.

2. Verfahren nach Anspruch 1, bei dem die Reaktantverbindung das [Mo₃S₁₃]²⁻-Ion enthält.

3. Verfahren nach Anspruch 1 oder Anspruch 2, bei dem zwei molare Äquivalente des Disulfids umgesetzt werden.

4. Verfahren nach einem der vorhergehenden Ansprüche, bei dem die dreikernige Molybdänverbindung die Formel Mo₃SₓL_{y} besitzt,
in der
x von 4 bis 10 ist, wie 4 oder 7,
l den Liganden darstellt und
y eine Zahl ist, um die Ladung an dem Mo₃Sₓ-
Kern zu neutralisieren.

5. Verfahren nach einem der vorhergehenden Ansprüche, bei dem das Disulfid Tetrakohlenwasserstoff-Thiuramdisulfid, Bis (dikohlenwasserstoff-dithiophosphonat)disulfid, Bis(dithiokohlenwasserstoff-dithiophosphonat)disulfid,Kohlenwasserstoffsubstituiertes Xanthogen oder Kohlenwasserstoff-substituiertes Thioxanthogen ist.

6. Verfahren nach Anspruch 5, bei dem die Kohlenwasserstoffgruppen Alkylgruppen mit beispielsweise von 3 bis 20 Kohlenstoffatomen sind.

## Revendications

1. Procédé de préparation d'un composé trinucléaire de molybdène-soufre, soluble dans l'huile ou dispersable dans l'huile, comprenant un noyau trinucléaire de molybdène lié à des ligands capables de rendre le composé soluble dans l'huile ou dispersable dans l'huile, un ou plusieurs des ligands contenant un atome de soufre, au moyen duquel il est lié au noyau, ledit procédé comprenant la mise en réaction de
(A) un équivalent molaire d'un composé réactif contenant un anion qui contient un noyau trinucléaire de molybdène et
(B) moins de 3 équivalents molaires d'un disulfure organique à partir duquel on obtient un ou plusieurs ligands pour produire ledit composé trinucléaire.

2. Procédé selon la revendication 1, dans lequel le composé réactif contient l'ion [Mo₃S₁₃]²⁻.

3. Procédé selon la revendication 1 ou la revendication 2, dans lequel on fait réagir deux équivalents molaires du disulfure.

4. Procédé selon l'une quelconque des revendications précédentes, dans lequel le composé trinucléaire de molybdène a la formule Mo₃SₓL_{y}
dans laquelle
x vaut de 4 à 10, par exemple 4 ou 7,
L représente les ligands, et
y est un nombre pour neutraliser la charge sur le noyau de Mo₃Sₓ.

5. Procédé selon l'une quelconque des revendications précédentes, dans lequel le disulfure est un disulfure de tétrahydrocarbylthiurame, un disulfure de bis(dithiophosphonate de dihydrocarbyle), un disulfure de bis(dithiophosphonate de dithiohydrocarbyle), un xanthogène à substitution hydrocarbyle ou un thioxanthogène à substitution hydrocarbyle.

6. Procédé selon la revendication 5, dans lequel les groupes hydrocarbyle sont des groupes alkyle ayant par exemple de 3 à 20 atomes de carbone.
